# EUROPEAN PATENT APPLICATION

(11) **EP 4 617 524 A2**
(43) Date of publication of application: **17.09.2025**
(21) Application number: 25192766.1
(22) Date of filing: 20.10.2022
(51) Int. Cl.: F16F 15/12

(54) **IMPROVED FILTERING PULLEY FOR A HEAVY VEHICLE**

(30) Priority: 22.10.2021 CN 202111235220; 22.10.2021 IT 202100027143
(62) Divisional of application: 22797884.8
(71) Applicant: Muviq S.r.l., 10015 Ivrea (TO) (IT)
(72) Inventor: CARICCIA, Gianluca, 10015 IVREA (TO) (IT); GUALA, Andrea, 10015 IVREA (TO) (IT); SPINELLI, Jacopo, 10015 IVREA (TO) (IT); AMADIO, Stefano, 10015 IVREA (TO) (IT)
(74) Representative: Studio Torta S.p.A.

(57) **Abstract**

A filtering pulley (1) comprising a hub (2), which is designed to be fixed to a rotary shaft rotating around an axis (A), and a crown (3), which is coaxial to said hub (2), the filtering pulley (1) comprising a filtering assembly (8) operatively interposed between the hub (2) and the crown (3) and comprising a housing (9) integral to the crown (3) and carried so that it can freely rotate relative to the hub (2) by means of support means (4),
the filtering assembly (8) defining a space (11) and comprising elastic means (12), which are housed inside the space (11) in a movable manner, and actuator means (13), which are configured to cooperate in contact with the elastic means (12),
the actuator means (13) being manufactured as one single piece together with a tubular portion (2a) of the hub (2) and the housing (9) cooperating in contact with the radial inner surface (5a) of the crown (3).

## Description

### Cross-Reference to Related Applications

This patent application claims priority of Italian Patent Application No. 102021000027143 and Chinese Patent Application No. 202111235220.9 filed on October 22, 2021, the entire disclosure of which is incorporated herein by reference.

### Technical Field

The invention relates to a filtering pulley, preferably a pulley for a crankshaft for an accessory drive system of an internal combustion engine for a heavy vehicle.

### Known State of the Art

As it is known, the drive shaft of internal combustion engines is subjected to torsional vibrations due to the periodic stresses caused by the combustion taking place in the cylinders. Said vibrations are particularly strong when the engine is started and at low speeds as well as in the presence of particular constructive solutions, such as for example the use of dual-clutch transmissions or start-stop systems.

Torsional vibrations translate into irregularities in the rotation of the drive pulley of the accessory drive system, which are transmitted to the accessories through the transmission belt, which, therefore, is subjected to periodic tension vibrations.

In order to "filter" the torsional vibrations transmitted by the crankshaft to the belt, a filtering pulley is generally used as drive pulley, said filtering pulley being provided with a hub integral to the drive shaft, a crown cooperating with the belt and one or more elastic elements, through which a torque is transmitted by the hub to the crown. In heavy vehicles, this need is even stronger, given the large operating loads.

Furthermore, heavy vehicles have different configurations, which require filtering pulleys with different dimensions and functionalities depending on the type of vehicle.

This request clearly leads to an increase in the manufacturing costs of pulleys of different types.

The object of the invention is to provide a filtering pulley capable of solving the technical problems discussed above in a simple and economic fashion.

### Summary of the Invention

The aforesaid object is reached by a filtering pulley according to the appended claims.

### Brief Description of the Drawings

The invention will be best understood upon perusal of the following detailed description of a preferred embodiment, which is provided by way of non-limiting example, with reference to the accompanying drawings, wherein:

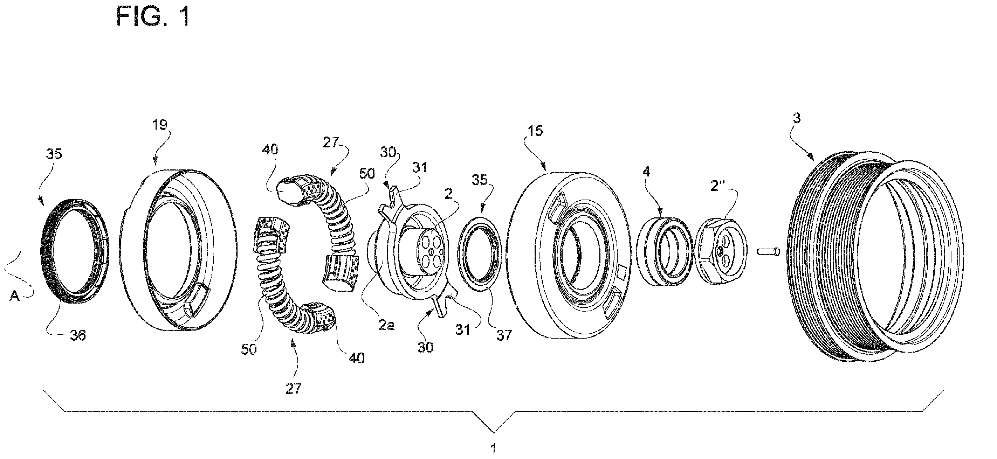

- Figure 1 is an exploded perspective view of a first embodiment of a filtering pulley according to the invention;
- Figure 2 is a longitudinal section view of the pulley of figure 1;
- Figure 3 is a cross section view according to line III-III of the pulley of figure 1;
- Figure 4 is a longitudinal section view of a second embodiment of a filtering pulley according to the invention;
- Figure 5 is a cross section view according to line V-V of the pulley of figure 4;
- Figure 6 is a longitudinal section view of a third embodiment of a filtering pulley according to the invention;
- Figure 7 is a cross section view according to line VII-VII of the pulley of figure 4;
- Figure 8 is a longitudinal section view of a fourth embodiment of a filtering pulley according to the invention;
- Figure 9 is a cross section view according to line IX-IX of the pulley of figure 8;
- Figure 10 is a longitudinal section view of a fifth embodiment of a filtering pulley according to the invention;
- Figure 11 is a cross section view according to line XI-XI of the pulley of figure 10;
- Figure 12 is a longitudinal section view of a sixth embodiment of a filtering pulley according to the invention;
- Figure 13 is a cross section view according to line XIII-XIII of the pulley of figure 12;
- Figure 14 is a longitudinal section view of a seventh embodiment of a filtering pulley according to the invention;
- Figure 15 is a cross section view according to line XV-XV of the pulley of figure 14;
- Figure 16 is a longitudinal section view of an eighth embodiment of a filtering pulley according to the invention;
- Figure 17 is a cross section view according to line XVII-XVII of the pulley of figure 16.

### Detailed Description of the Invention

The accompanying figures show a filtering pulley 1 comprising a hub 2 with axis A, which is designed to be connected to a shaft (which is not shown herein), for example a crankshaft of an internal combustion engine, and an annular crown 3, which is externally coaxial to the hub 2 and is supported by the hub 2 through support means 4 so that it can freely rotate.

In particular, the crown 3 comprises an annular portion 5 defining a radial inner surface 5a and an outer surface 5b defining at least one profile 6, which is designed to cooperate with a mechanical transmission element, such as for example a poly-V belt (which is not shown herein).

The hub 2 comprises a tubular portion 2a, which is axially interposed between a first connection portion 2' and a second connection portion 2". The first and the second connection portions 2', 2" are configured to allow the drive shaft (which is not shown) to be connected to the hub 2.

The pulley 1 further comprises a filtering assembly 8, which is operatively interposed, in a radial direction, between the crown 3 and the hub 2, advantageously between the tubular portion 2a and the surface 5a.

In particular, according to the invention, the filtering assembly 8 comprises a housing 9, which is integral to the crown 3, cooperates in contact with the surface 5a and defines a space 11, filtering means 12, which are housed inside the space 11 in a movable manner, and actuator means 13, which are manufactured as one single, i.e. monolithich, piece together with the hub 2, in particular with the tubular portion 2a, and are configured to cooperate in contact with the filtering means 12 inside the space 11 in order to selectively transmit torque between the hub 2 and the crown 3.

The housing 9 comprises a cup-shaped element 15 comprising an annular outer wall 16 and an annular inner wall 17, which are connected to one another by a radial wall 18. Advantageously, said walls of the cup-shaped element 15 are manufactured as one single piece.

The housing 9 comprises a closing element 19, which faces the cup-shaped element 15 and comprises an annular outer wall 21, an annular inner wall 20 and a radial wall 22, which connects the two annular walls. Advantageously, said walls of the closing element 19 are manufactured as one single piece.

In particular, the annular outer wall 16 of the cup-shaped element 15 is housed so as to cooperate in contact with the radial inner surface 5a of the crown 3 and the annular outer wall 21 of the closing element 19 is housed so as to cooperate in contact with the annular outer wall 16 of the cup-shaped element 15 on the opposite side relative to the radial inner wall 5a.

On the opposite side, the annular inner wall 18 is housed so as to cooperate in contact with the support means 4, whereas the radial wall 22 of the closing element 19 radially extends in a limited manner relative to the annular inner wall 18 of the cup-shaped element 15, thus opening a passage 23 allowing access to the space 11.

In particular, the passage 23 is radially delimited by the radial inner wall 20 of the closing element 19 and by the radial inner wall 18 of the cup-shaped element 15 and is obviously open in an axial direction.

In particular, the support means 4 comprise rolling bearings, especially a pair of ball bearings radially interposed between the wall 18 of the cup-shaped element 15 and the tubular portion 2a of the hub 2 and axially interposed between a terminal turn-up 24 of the wall 18 and one of the connection portions 2', 2".

The closing element 19 and/or the cup-shaped element 15 finally comprise two diametrically opposite projections 25, which axially extend into the space 11 starting from the wall 17 and 19. The projections 25 divide the space 1 into two portions 11a, 11b, which are circumferentially delimited by the projections 25 and radially delimited by the walls 17, 19.

The projections 25 are carried by the respective walls in a fixed manner or, alternatively, are manufactured as one single piece together with them.

As shown, the filtering means 12 comprise at least one elastic assembly 27, which is arranged in a circumferentially free manner in the respective portions 9a, 9b of the space.

The actuator means 13 advantageously comprise a disc actuator 30 comprising two spokes 31, which are free to circumferentially move in the space 11 and are designed to interact with the filtering means 12.

In particular, each spoke 31 comprises a radial inner portion 31a radially extending from the tubular portion 2a of the hub 2, an annular portion 31b axially extending from the radial end of the radial inner portion 31a opposite the hub 2 and a radial outer portion 31b configured to cooperate with the filtering means 12.

Consequently, the radial inner portion 31a is housed inside the space 11, whereas the annular portion 31b is sized so as to go through the space 23 without coming into contact with the housing 9.

In particular, the spokes 31 are positioned so as to be centred relative to the support means 4; in other words, the middle line of their section coincides with a symmetry axis of the support means. Hence, in case of a pair of rolling bearings, the middle line of the spokes lies between the two rolling bearings.

Preferably, the stroke of the elastic assemblies 27 in the respective portions 11a, 11b can result from an angular clearance α present between each one of the elastic assemblies 27 in contact with either one of the projections 25.

Similarly, the spokes 31 can be spaced apart from the elastic assemblies 27 by an angular clearance β, which adds to the angular clearance α during the operation of the pulley 1 as described below.

The pulley 1 furthers comprises sealing means 35, which are configured to be operatively interposed between the actuator means 13, the hub 2 and the housing 9 so as to prevent foreign elements from reaching the space 11 and the support means 4.

In particular, said sealing means 35 comprise a gasket 36 for rotary elements, such as a labyrinth seal fixed to the structure 9 and sliding on the actuator disc 30. In particular, the gasket 36 is radially interposed between the radial wall 22 of the closing element 19 and the annular portion 31b.

Preferably, the sealing means 35 further comprise a gasket 37 for rotary elements, which is axially interposed between the radial inner portion 31a and the terminal turn-up 24 of the cup-shaped element 15, and axial thrust means 38, which are axially interposed between the gasket 37 and the radial inner wall 31a. In particular, said axial thrust means 38 comprise a Belleville washer, which is configured to exert a compression force directed towards the gasket 37.

The pulley 1 can further comprise at least one pair of end sliding blocks 40, each comprising an arched portion 41, which internally surrounds an end portion of the elastic assemblies 27, and a head 42 defining an axial support for said end portion.

The pulley 1 can further be provided with a dynamic damper (which is not shown herein) carried either by the first connection portion 2' or by the second connection portion 2".

Now reference will be made to the embodiments shown in the accompanying drawings, pointing out the differences of each one of them relative to the common description discussed above.

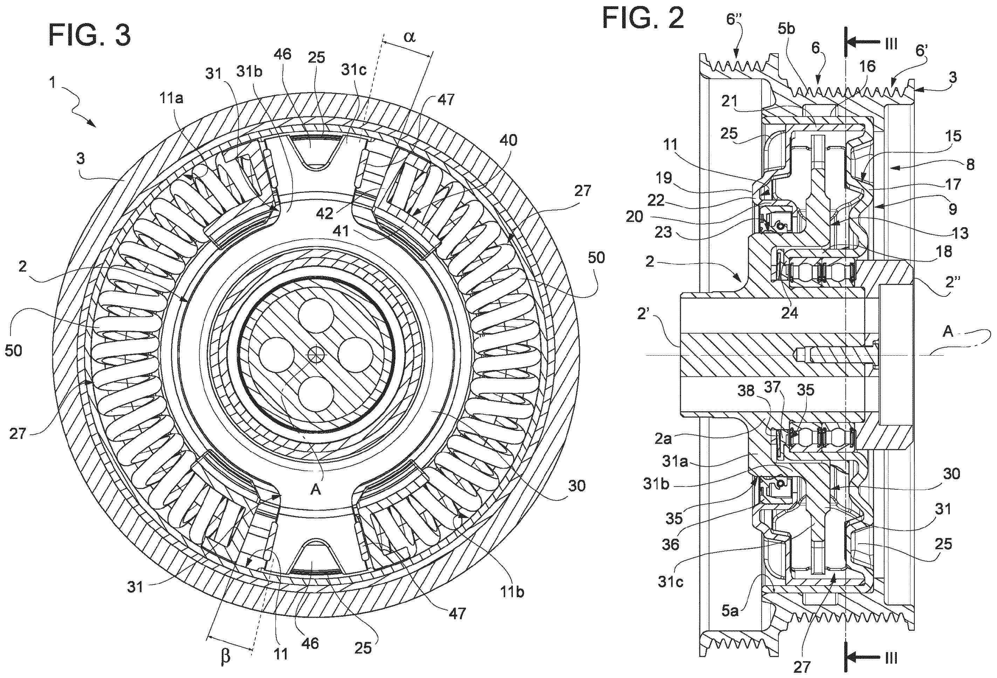

In the embodiment of figures 2 and 3 there are both the angular clearance α and the angular clearance β and both spokes have an axial opening 46 made in a radially terminal portion. Both spokes 31 also comprise an impact element 47, for example an element made of a polymer and rigidly carried by the radial outer portion 31c of the spoke 31 so as not to directly hit the elastic assembly 27. In the case described herein, the impact element 47 hits the head 42 of the sliding block 40.

The elastic assemblies 27 each comprise an arched helical spring 50 having a fixed pitch along its circumferential extension.

The second connection portion 2" is advantageously manufactured as a separable element, which can be fixed to the tubular portion 2a of the hub 2 and can help a dynamic damper as well as act as axial thrust-bearer of the support means 4. The first connection portion 2', on the other hand, is manufactured as one single piece together with the tubular portion 2.

The crown 3 defines, in particular, a pair of poly-V profiles 6, in particular a first profile 6' and a second profile 6", which are radially staggered relative to one another so that the first profile 6' is radially closer to the axis A than the first one. In the embodiment shown herein, the first and the second profiles 6', 6" are both obtained on respective cylindrical walls with a different radius and the first profile 6' axially extend to a greater extent than the second profile 6".

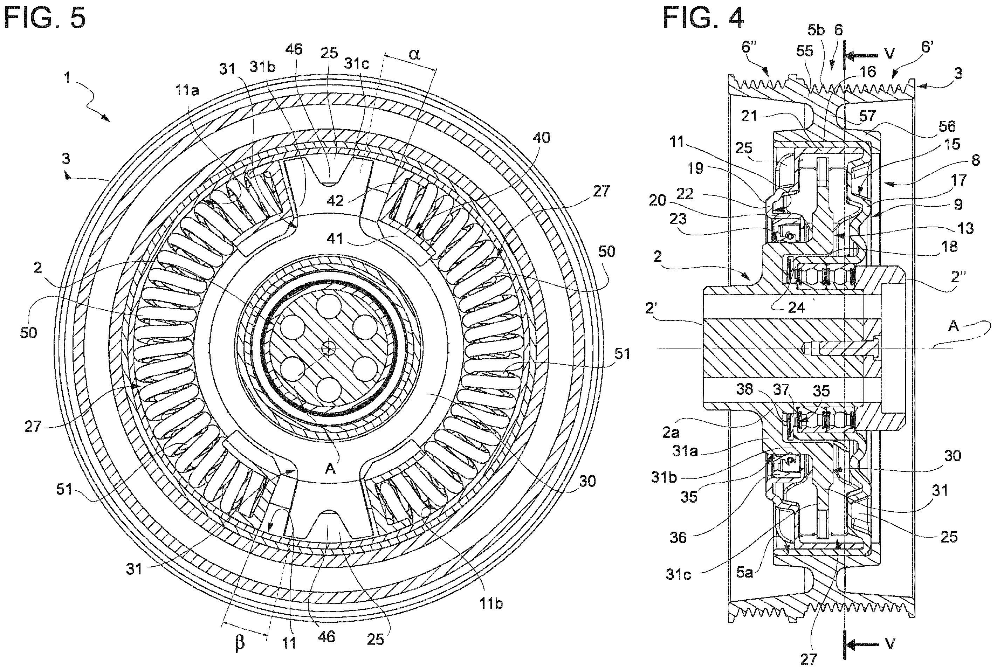

In the embodiment of figures 3 and 4 there are both the angular clearance α and the angular clearance β and both spokes have an axial opening 46 made in a radially terminal portion.

The elastic assemblies 27 each comprise a first arched helical spring 50, which has a fixed pitch along its circumferential extension, and a second arched helical spring 51, which has a fixed pitch and is radially housed within the first spring 50. In this way, the elastic assembly 27 has a stiffness that is equal to the sum, in parallel, of the first and of the second spring 50, 51.

The second connection portion 2" is advantageously manufactured as a separable element, which can be fixed to the tubular portion 2a of the hub 2 and can help a dynamic damper as well as act as axial thrust-bearer of the support means 4. The first connection portion 2', on the other hand, is manufactured as one single piece together with the tubular portion 2.

The crown 3 defines, in particular, a pair of poly-V profiles 6, in particular a first profile 6' and a second profile 6", which are radially staggered relative to one another so that the first profile 6' is radially closer to the axis A than the first one. In the embodiment shown herein, the first and the second profiles 6', 6" are both obtained on respective cylindrical walls with a different radius and the first profile 6' axially extend to a greater extent than the second profile 6". In particular, the crown 3 has a "H"-shaped section so that the aforesaid profiles 6 are obtained on a radial outer surface 5b of an annular outer portion 55 of the crown 3 connected to an annular inner portion 56, coaxial to the previous one, defining the radial inner surface 5a cooperating with the filtering assembly 8.

The annular outer and inner portions 55, 56 are connected to one another by means of a radial bridge 57, preferably arranged so as to substantially coincide with the symmetry axis of the spokes 31.

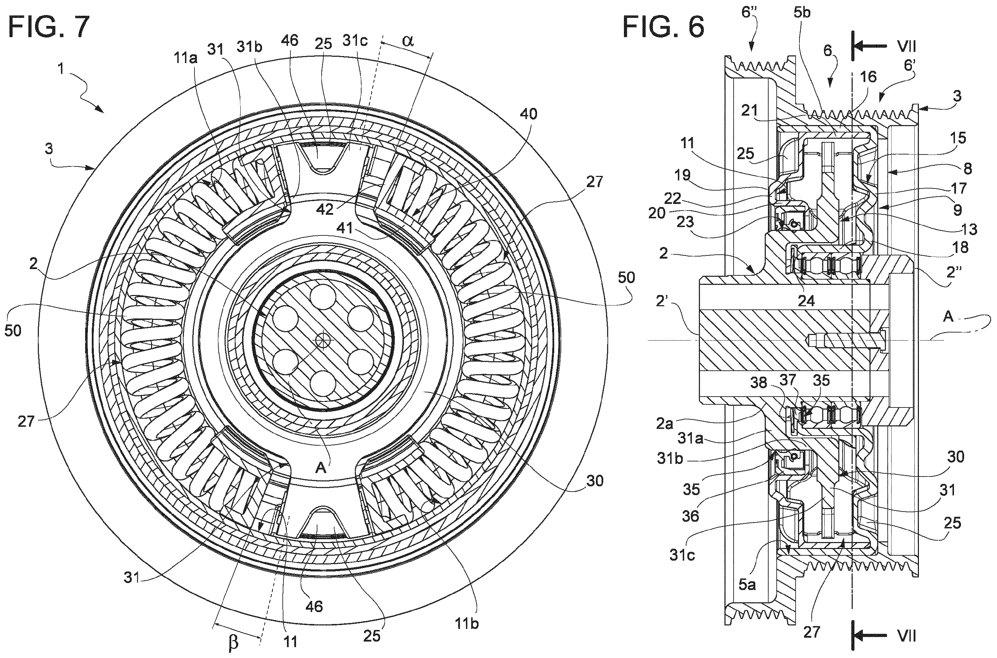

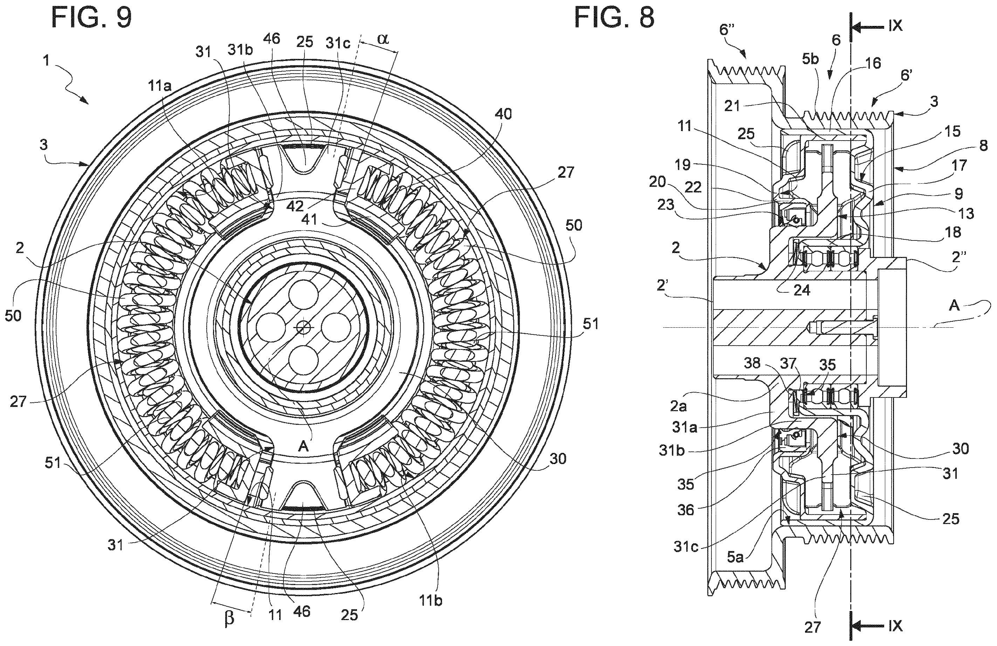

The embodiment of figures 6 and 7 is substantially similar to the embodiment of figures 2 and 3, but the second profile 6'' is radially more on the outside and has a smaller axial extension compared to the embodiment of figures 2, 3. The embodiment of figures 8 and 9 is substantially similar to the embodiment of figures 2 and 3, but the second profile 6" is radially more on the outside and has a smaller axial extension compared to the embodiment of figures 2, 3. Furthermore, the elastic assemblies 27 comprise a first and second spring 50, 51, like the embodiment of figures 4 and 5.

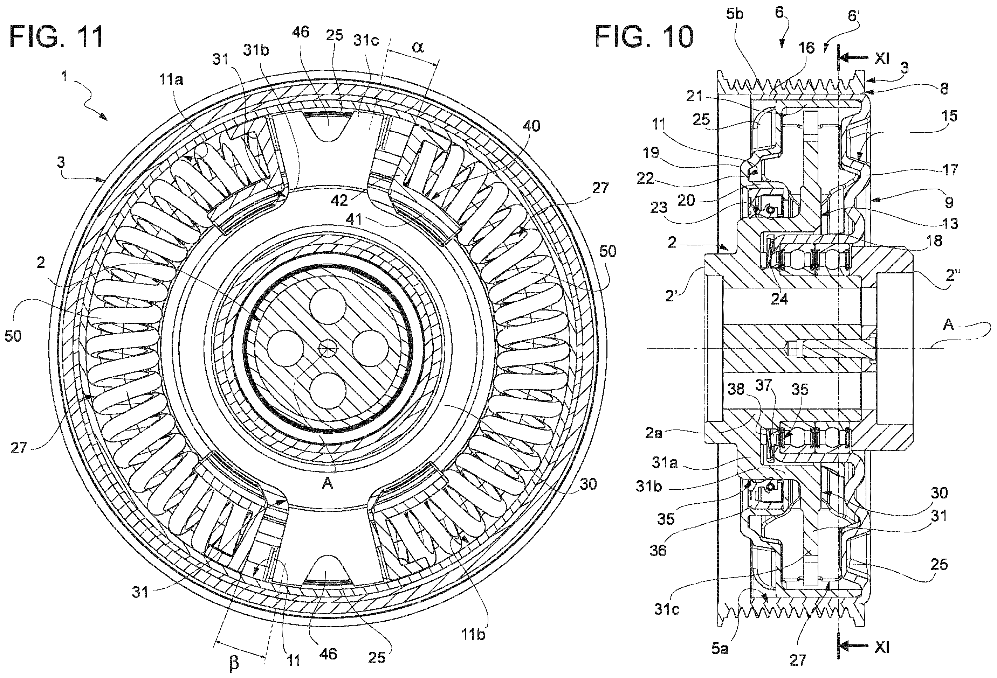

In the embodiment of figures 10 and 11, compared to the embodiment of figures 3 and 4, the difference lies in the crown 3, which defines one single profile 6 on the surface 5b. Indeed, the crown 3, in this case, is defined by one single annular element defining the radial inner surface 5a, on one side, and the radial outer surface 5b defining the only ply-V profile, on the other side.

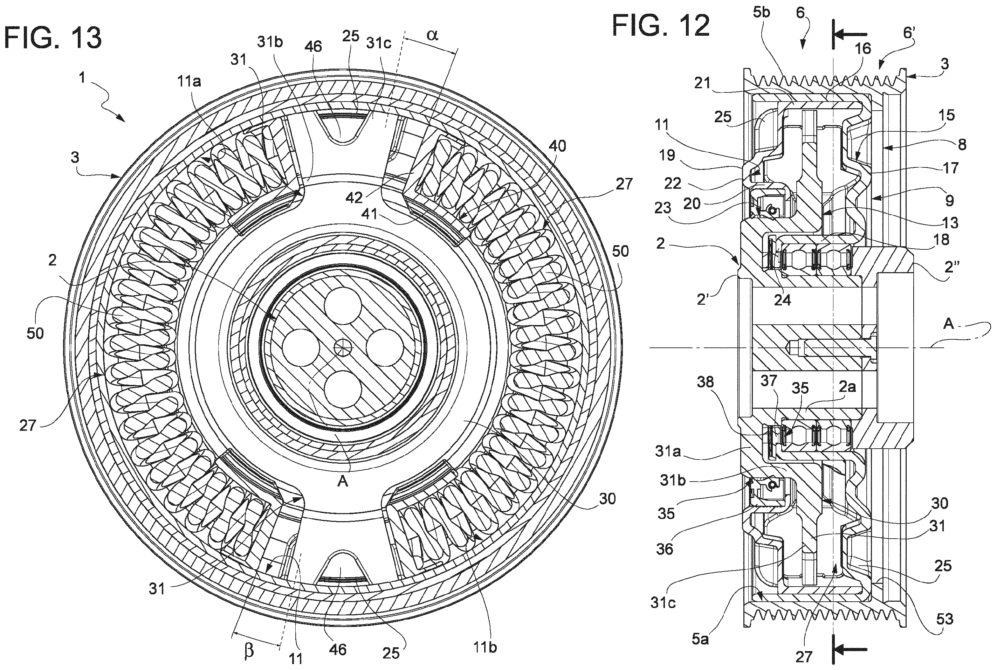

In the embodiment of figures 12 and 13, compared to the embodiment of figures 10 and 11, there is a radial inner projection 53 radially extending from the inside of the radial inner surface 5a so as to cooperate in contact with the cup-shaped element 15 in order to limit a possible axial movement thereof.

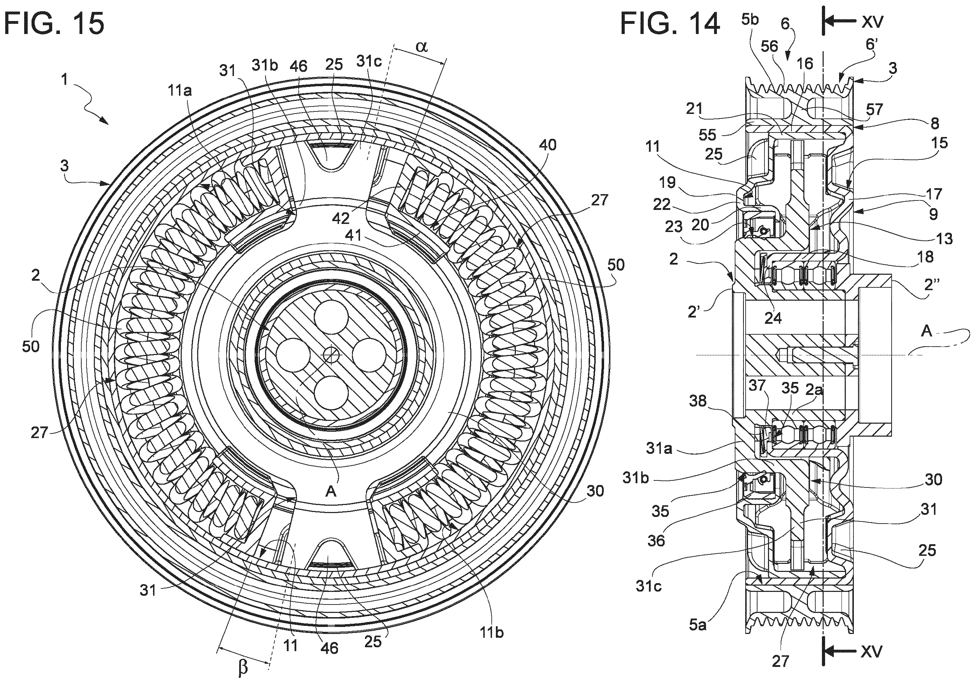

In the embodiment of figures 14 and 15, compared to the embodiment of figures 10 and 11, the crown 3 comprises an element having a "H"-shaped section, in which the radial inner portion 55 defines the radial inner surface 5a, whereas the radial pouter portion 56 defines the radial outer surface 5b defining the only poly-V profile. The two portions 55, 56 are joined to one another by a radial bridge 57, which is advantageously arranged so as to coincide with the middle axis of the spokes 31 and of the support means 4.

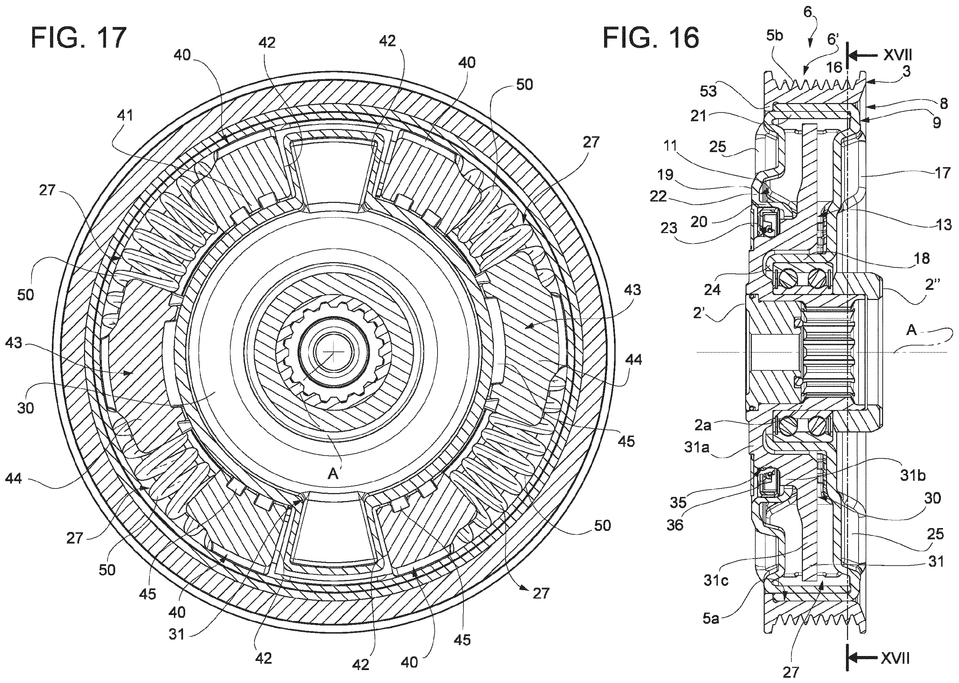

In the embodiment of figures 16 and 17 there are neither the angular clearance α nor the angular clearance β (or, better said, in the case shown herein they have values in a smaller order of magnitude compared to the embodiments described above). Both spokes 31 have a solid section, without openings of the type described for the previous embodiments.

The elastic assemblies 27 each comprise an arched helical spring 50 having a fixed pitch along its circumferential extension.

The second connection portion 2" and the first connection portion 2' are both advantageously manufactured as separable elements, which can be fixed to the tubular portion 2a of the hub 2. In particular, the second connection portion 2' can help a dynamic damper as well as act as thrust-bearer of the support means 4.

The crown 3 defines, like in the embodiment of figures 12 and 13, one single poly-V profile 6 and a radial inner projection 53 cooperating with the filtering assembly 8.

The pulley further comprises, in addition to the sliding blocks 40, which it shares with the other embodiments, an intermediate sliding block 43, which comprises a pair of lateral walls 4 and is circumferentially open. According to figure 17, the sliding blocks 40 and the intermediate sliding block 43 define a plurality of grooves 45, in the case shown herein axially extending grooves, which are configured to help oil flow in the portions 11a, 11b.

The operation of the pulley 1 is described below with reference to the first embodiment (figures 3 and 4), the operation of the other embodiments being similar to or simplified relative to the first embodiment.

To this purpose, since in said embodiment two different belt systems can be connected by means of the two profiles 6', 6", the torque acting upon the crown 3 clearly is the sum of the two.

In a first operating step, called "driving mode" and constituting the normal operation of the pulley 1, when the drive shaft drives the accessories, the speed of the hub 2 tends to exceed the speed of the crown 3. For this reason, the spokes 31 transmit the torque to the projections 25 with the interposition of the respective elastic assemblies 27.

This also happens, in a symmetrical manner, in the "overrunning" condition, namely when the speed of the crown 3 tends to exceed the speed of the hub 2.

In both operating conditions, the sealing means 35 provide a damping for the free rotation ensured by the support means 4 between the hub 2 and the crown 3.

Said damping is also provided by the flow of the oil contained in the space 11, which flows through the elastic assemblies 27, in particular between said at least one helical spring 50 and the sliding blocks 40, 43.

If the free angles α, β are present, there is a free rotation angle between the hub 2 and the crown 3, so that no torque is transmitted despite the relative rotation between these two elements. Said free rotation angle is the result of the sum of the free angles α, β.

Indeed, the spoke 31, at first, starts rotating in an idle manner until the elastic assemblies 27 meet the respective projection 25, so that they start compressing, thus transmitting torque.

Therefore, the advantages of a pulley 1 according to the invention are evident.

Thanks to the actuator means 13 manufactured as one single piece together with the hub 2, large loads can be transmitted without damaging risks.

Through the use of a filtering assembly 8 of the type described above it is possible to change the shape of the hub, in particular of its portions connecting it to the drive shaft and to the dynamic damper, and of the diameter of the crown without having to replace the filtering assembly.

Indeed, as shown in the different sections of figure 2 and following even numbers, the filtering assembly has the same size and is replaceable in the different embodiments shown, despite the change in the shapes and diameters of the crown and of the connection portions of the hub 2.

Furthermore, the filtering assembly can contain different elastic means, such as one single spring, several springs in series or in parallel or with a variable thread in order to allow for a variable filtering depending on design needs.

In addition, the use of spring carrying elements allows the movement of the elastic means inside the respective seats to be guided.

The use of spring carrying elements provided with grooves allows the stroke thereof to be used to generate damping, forcing the passage of oil in said grooves.

Furthermore, between spokes and/or projections and elastic assemblies there can be angular clearances with a variable width, which are configured to provide a dead angle between hub and crown, which has a width that varies depending on different filtering needs.

The presence of a pair of rolling bearings as support means allows the pulley to bear large radial loads. Indeed, the fact that the spoke is placed in the middle of the support means and, advantageously, of the poly-V section allows tilting loads to be reduced, thus increasing the useful life of the support means.

Finally, the pulley described above can be subjected to changes or variants, which do not go beyond the scope of protection set forth in the appended claims.

First of all, the pulley does not necessarily have to be used on the crankshaft of an internal combustion engine, but could be used for one of the accessories thereof.

With reference to the elastic assemblies 27, they could be manufactured differently, though without changing their function. For example, they could comprise springs of a different nature or several springs, in series or in parallel. In addition, there could be four elastic assemblies as well as four spokes of the actuator.

A dynamic damper could be absent and the actuator could be carried by the hub 2 in a different manner. Similarly, the support means 4 could be replaced by a bushing.

Moreover, the angular values α, β could be absent or have a different width depending on the type of dynamic torsional behaviour of the drive shaft in the specific application.

Furthermore, there could be one or more damping device in addition to what described above.

Clearly, the shape of the crown 3 and of the connection portions 2', 2" can be different depending on design needs.

## Claims

1. A filtering pulley (1) comprising a hub (2), which is designed to be fixed to a rotary shaft rotating around an axis (A), and a crown (3), which is coaxial to said hub (2),
said crown (3) defining a radial outer surface (5b) defining at least one profile (6), which is configured to cooperate with a mechanical transmission element,
said filtering pulley (1) comprising a housing (9) integral to said crown (3) and defining a space (11) and a filtering assembly (8) operatively interposed between said hub (2) and said crown (3), said filtering assembly (8) being carried so that it can freely rotate within said space (11) about said axis (A),
said filtering assembly (8) comprising elastic means (12), which are housed inside said space (11) in a movable manner, and actuator means (13), which are configured to cooperate in contact with said elastic means (12) and carried by said hub (2),
wherein said elastic means (12) comprise an elastic assembly (27), said elastic assembly comprising at least one helical spring (50),
wherein said elastic assembly (27) comprises at least one spring carrying element (40), which is configured to at least partly house an axial portion of said at least one spring (50) and guide the sliding of said at least one spring (50) in said space, and
wherein said elastic assembly (27) comprises an intermediate spring carrier (43), which is intermediate between the ends of said at least one spring (50), said spring carrier (43) comprising a pair of lateral walls (44), which are configured to surround an axial portion of said at least one spring (50).

2. The filtering pulley according to claim 1, wherein said housing (9) comprises a cup-shaped element (15), which is configured to cooperate with said said crown (3) , and a closing element (19), which is configured to cooperate in contact with said cup-shaped element (15) in order to define said space (11).

3. The filtering pulley according to claim 2, wherein said cup-shaped element (15) and said closing element (19) are shaped so as to define an axial opening (23), through which said actuator means (13) are partially housed inside said space (11).

4. The filtering pulley according to claim 2 or 3, wherein at least one of said cup-shaped element (15) and said closing element (19) defines a pair of axial projections (25), said projections (15) dividing said space (11) into two portions (11a, 11b) where said elastic means (12) can move due to the action of said actuator means (13).

5. The filtering pulley according to one of the claims from 2 to 4, wherein said closing element (19) is radially comprised inside said cup-shaped element (15).

6. The filtering pulley according to any of the preceding claims, wherein said elastic assembly (27) comprises a first and a second helical springs (50, 51).

7. The filtering pulley according to any of the preceding claims, wherein said elastic assembly (27) comprises a pair of spring carrying elements (40) , which are arranged at respective ends of said at least one spring (50) and are provided with a pair of lateral walls (41), which are configured to surround an axial portion of said at least one spring (50), and with a head (42), which is connected to said lateral wall (41), said head (42) cooperating in contact with said actuator means (13).

8. The filtering pulley according to one of the preceding claims, wherein said actuator means (13) comprise a disc (30) provided with a plurality of spokes (31), said spokes comprising a radial inner portion (31a) on the outside relative to said space (11), a radial inner portion (31c), which is internally housed in said space (11) and cooperates in contact with said elastic assembly (27), and an axial portion (31b), which joins said radial inner and outer portions (31a, 31c).

9. The filtering pulley according to claim 8 wherein each spoke (31) defines a through opening (46) arranged at a radial end of each spoke (31).

10. The filtering pulley according to claim 8 or 9, wherein each spoke (31) comprises impact elements (47), which are configured to cooperate in contact with said elastic assembly (27), said impact elements (47) being made of a polymer material and being integral to said spoke (31).

11. The filtering pulley according claim 4, wherein between said projections (25) and said elastic assembly (27) there is an angular clearance (α).

12. The filtering pulley according to one of the claims from 9 to 11, when they depend on claim 4, wherein between each spoke (31) and said elastic assembly (27) there is an angular clearance (β).

13. The filtering pulley according to one of the preceding claims, wherein at least one of said connection portions (2', 2") of said hub (2) is manufactured as one single piece together with said tubular portion (2a).

14. The filtering pulley according to one of the claims from 1 to 13, wherein both connection portions (2', 2") are manufactured separately and connected to said tubular portion (2a).
